# EUROPEAN PATENT APPLICATION

(11) **EP 2 339 834 A2**
(43) Date of publication of application: **29.06.2011**
(21) Application number: 10172799.8
(22) Date of filing: 13.08.2010
(51) Int. Cl.: H04N 5/445

(54) **Display Apparatus and Method of Controlling Contents Thereof**

(30) Priority: 24.12.2009 KR 20090130883
(71) Applicant: Samsung Electronics Co., Ltd., Suwon-si, Gyeonggi-do (KR)
(72) Inventor: Kim, Won-il, Gyeonggi-do (KR); Kwon, Yong-hwan, Gyeonggi-do (KR)
(74) Representative: Hewett, Jonathan Michael Richard

(57) **Abstract**

A display apparatus and a method of controlling contents thereof, the display apparatus including: a communication unit which is connected to a first external device; a content input unit which receives second source-type multimedia content from a second external device; and a controller which controls the communication unit to search first source-type multimedia content stored in the first external device and to transmit to the first external device a control signal for requesting the searched first source-type multimedia content to be received by the communication unit, and which generates unified index information for unified navigation of the first and the second source-type multimedia contents received from the first and second external device.

## Description

The present invention relates to a display apparatus and a method of controlling contents thereof, capable of searching and unified navigation of a plurality of source-type multimedia contents, and more particularly, to a display apparatus and a method of controlling contents thereof, which searches external devices, receives a plurality of source-type multimedia contents stored in the external devices, forms a channel map by allotting channels to the received multimedia contents, and generates and displays unified index information capable of the unified navigation, to thereby increase a usability of multimedia contents and a convenience of use.

Recently, there has been a trend to popularize a digital television (TV). Through the digital TV, it is possible to watch broadcasting contents, enjoy watching desired moving pictures and playing games by connecting the digital TV to external devices (such as a digital versatile disc (DVD), a blu ray disc (BD) player, or a game console), use an Internet service; use various multimedia services (such as a picture view and an MP3 player), and record and play back desired moving pictures by using a personal video recorder (PVR) function.

However, to use many functions of the digital TV, respective modes are required to be switched per source of providing the above contents. For example, a DVD and/or BD player mode is required to be selected in a TV menu to use a DVD and/or BD player function. A picture-view mode is required to be selected in a TV menu to view pictures. A music mode is required to be selected in a TV menu to listen to music. As a result, to use a desired function, a user is required to select a corresponding mode per each source in a TV menu and search and select a corresponding file through a file search. This may result in a large inconvenience to the user.

Accordingly, one or more exemplary embodiments provide a display apparatus and a method of controlling contents thereof, which search a plurality of source-type multimedia contents stored in external devices connected to the display apparatus. Another exemplary embodiment provides a display apparatus and a method of controlling contents thereof, which generate and display unified index information capable of unified navigation of a plurality of source-type multimedia contents.

Still another exemplary embodiment provides a display apparatus and a method of controlling contents thereof, which form a channel map by allotting channels to a plurality of source-type multimedia contents and generate and display unified index information capable of unified navigation. Accordingly, a user can easily navigate all multimedia contents that are usable in the display apparatus by manipulating an up/down key of a user input unit.

Yet another exemplary embodiment provides a display apparatus and a method of controlling contents thereof, which allot channels to a plurality of source-type multimedia contents by classifying multimedia contents per category regardless of their source types.

Still yet another exemplary embodiment provides a display apparatus and a method of controlling contents thereof, which allot channels to a plurality of source-type multimedia contents by classifying the multimedia contents per source type.

According to an aspect of the present invention, there is provided a display apparatus including: a communication unit which is communicably coupled to a first external device; a content input unit which receives a second source-type multimedia content from a second external device; and a controller which controls the communication unit to search first source-type multimedia content stored in the first external device and to transmit to the first external device a control signal for requesting the searched first source-type multimedia content to be received by the communication unit, and which generates unified index information for unified navigation of the first and the second source-type multimedia contents received from the first external device in response to the control signal and from the second external device, respectively.

The display apparatus may further include a storage unit which stores the generated unified index information.

The display apparatus may further include: a content processing unit which processes the received first and second source-type multimedia contents; an output unit which outputs at least one of an image and an audio based on the multimedia contents processed by the content processing unit; and a user input unit which receives a user's input, wherein the controller controls the content processing unit to process the selected multimedia content according to the user's input with reference to the unified index information, and the output unit to output the at least one of the image and the audio corresponding to the processed selected multimedia content.

The controller may generate the unified index information by forming a channel map by a channel allotment of the first and the second source-type multimedia contents.

The controller may classify the first and the second source-type multimedia contents per category and may form the channel map by allotting channels thereto according to the classified categories.

The controller may classify the first and the second source-type multimedia contents per source type and may form a channel map by allotting channels thereto according to the classified source types.

The controller may form a category home which represents the classified categories and allots a channel to the formed category home.

The category home may include information related to source-type multimedia contents belonging to categories of the category home.

The information related to the contents may include at least one of channels allotted to the contents, kinds of the contents, sizes thereof, names thereof, and thumbnail images thereof.

The user input unit may include an up/down key, and the user's input may include a selection of one of the plurality of the source-type multimedia contents by performing the unified navigation of the unified index information by using the up/down key.

The content input unit may include a first receiving unit which receives a broadcasting signal.

The content input unit may include a second receiving unit which receives an image signal from the second external device.

The display apparatus may further include a user interface (UI) generating unit which generates a graphical user interface (GUI) showing the unified index information and which displays the generated GUI through the output unit, wherein, if the GUI is selected by a user's input inputted from the user input unit, the controller may control the output unit to display the unified index information generated by forming a channel map through a channel allotment of the source-type multimedia contents.

The GUI may show the unified index information that is generated by the channel map formed by classifying the plurality of the source-type multimedia contents per category and allotting channels thereto.

The GUI may show the unified index information that is generated by the channel map formed by classifying the plurality of the source-type multimedia contents per source type and allotting channels thereto.

According to another aspect of the present invention, there is provided a method of controlling a content of a display apparatus, the method including: receiving second source-type multimedia content through a content input unit of the display apparatus; searching first source-type multimedia content stored in a first external device connected to a communication unit of the display apparatus and transmitting to the first external device a control signal for requesting the searched multimedia content to be received by the communication unit; and generating unified index information for unified navigation of the first and the second source-type multimedia contents received from the first and the second external devices.

The method may further include storing the generated unified index information.

The method may further include: receiving a user's input for selecting one of the first and the second source-type multimedia contents with reference to the unified index information; processing the selected multimedia content; and outputting at least one of an image and an audio corresponding to the processed multimedia content.

The generating of the unified index information may include generating unified index information by forming a channel map by a channel allotment of the first and the second source-type multimedia contents.

The generating the unified index information may include forming a channel map by classifying the first and the second source-type multimedia contents per category and by allotting channels to the channel map according to the classified categories.

The generating the unified index information may include forming a channel map by classifying the first and the second source-type multimedia contents per source type and by allotting channels to the channel map according to the classified source types.

The generating the unified index information may include forming a category home which represents the classified categories and allotting a channel to the formed category home.

The category home may include information related to the source-type multimedia contents belonging to categories of the category home.

The information related to the contents may include at least one of channels allotted to the contents, kinds of the contents, sizes thereof, names thereof, and thumbnail images thereof.

The receiving the user's input may include selecting one of the source-type multimedia contents by performing the unified navigation of the unified index information by using an up/down key of a user input unit.

The receiving the second source-type multimedia content may include receiving the second source-type multimedia content from a first receiving unit which receives a broadcasting signal.

The receiving the second source-type multimedia content may include receiving the second source-type multimedia content from a second receiving part which receives an image signal from the second external device.

The method may further include: generating a GUI showing the unified index information and displaying the generated GUI through an output unit; and displaying the unified index information generated by forming a channel map through a channel allotment of the first and the second source-type multimedia contents if the GUI is selected by the user's input.

The GUI may show the unified index information that is generated by a channel map formed by classifying the source-type multimedia contents per category and allotting channels thereto.

The GUI may show the unified index information that is generated by a channel map formed by classifying the source-type multimedia contents per source type and allotting channels thereto.

According to another aspect of the present invention, there is provided a method of controlling content of a display apparatus, the method including: connecting the display apparatus to a first external device providing first source-type multimedia content; connecting the display apparatus to a second external device providing second source-type multimedia content; and generating unified index information for unified navigation of the first and the second source-type multimedia contents.

The above and/or other aspects will become apparent and more readily appreciated from the following description of exemplary embodiments, taken in conjunction with the accompanying drawings, in which:
FIG. 1 is a block diagram showing components of a display apparatus according to an exemplary embodiment;
FIG. 2 shows a method of providing a broadcasting / external device / multimedia service in a related art television (TV);
FIG. 3 shows unified index information capable of searching a plurality of source-type multimedia contents provided from a display apparatus according to an exemplary embodiment by using unified navigation thereof;
FIGs. 4 and 5 show a case where multimedia contents are classified per category, a category home serving as a representative of the classified contents is formed, and a channel is allotted to the formed category home according to an exemplary embodiment; and
FIGs. 6 and 7 are flow charts showing a control operation of a display apparatus according to an exemplary embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

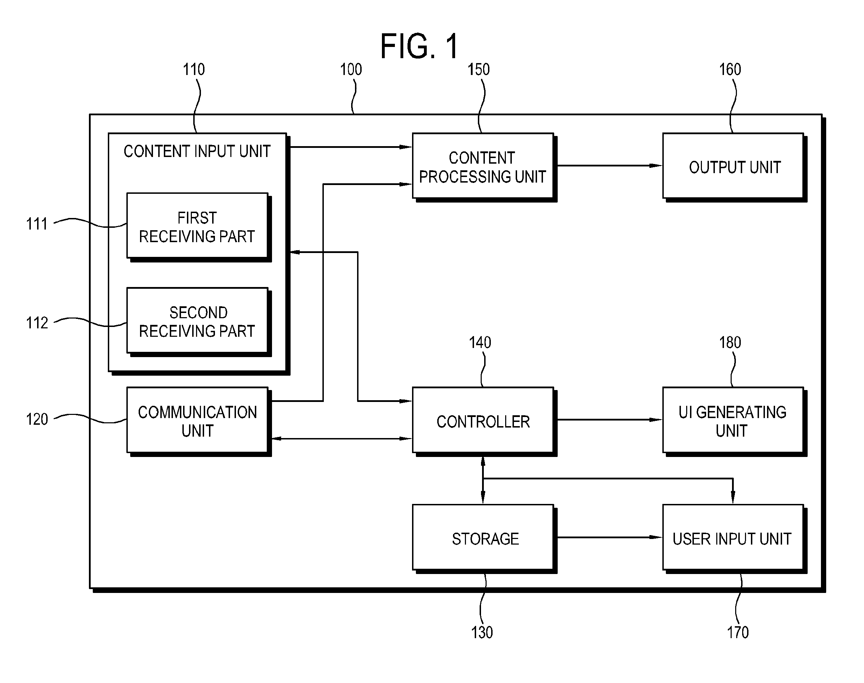

FIG. 1 is a block diagram showing components of a display apparatus 100 according to an exemplary embodiment. Referring to FIG. 1, the display apparatus 100 may include a content input unit 110, a communication unit 120, a storage 130, and a controller 140.

The content input unit 110 may input at least one of a plurality of source-type multimedia contents. Such source types may include a plurality of electric devices capable of transmitting the multimedia contents to the display apparatus 100. Specifically, the source types may include at least one of: an electric device such as a broadcasting transmission device which transmits at least one of a satellite, a cable, and a ground-wave broadcasting signal; an external image device, which transmits an image signal, such as a DVD and/or BD player, a game console, and/or a PVR; an external storage medium, which is connected to the display apparatus 100, such as a universal serial bus (USB) medium or an external hard disk drive; and an electronic device, which communicates with the display apparatus 100 through a network to transmit contents thereto, such as a PC, a mobile PC (e.g., a smart book, a laptop, and a net book), a camera, a cellular phone, an MP3 player, a personal multimedia player (PMP), or a personal digital assistant (PDA).

Therefore, according to the source types, the content input unit 110 may further include a first receiving unit 111 which receives a first signal (e.g., a broadcasting signal) from a first external device and a second receiving unit 112 which receives a second signal (e.g., an image signal) from a second external device.

The first receiving unit 111 may include a receiving module (not shown) which receives at least one of a satellite, a cable, and a ground-wave broadcasting signal from an external broadcasting transmission device and a tuner (not shown) which is tuned to the received broadcasting signal.

The second receiving unit 112 may include a receiving unit (not shown) which receives an image signal from the second external device, such as a DVD, a BD player, a game console, and/or a PVR.

The communication unit 120 may perform a communication with an external device through a network. The network may include a wired or a wireless network. Accordingly, the communication unit 120 may include a communication module for the wired or the wireless network and, thus, a communication protocol of a wireless local area network (WLAN) for the wireless network. In addition, the communication unit 120 may include communication modules corresponding to various other communication methods, such as Bluetooth, Wi-Fi, Zigbee, infrared (IR) communication, and radio frequency (RF) communication. The communication unit 120 having such communication modules may perform a communication according to various home network communication standards. For example, the communication unit 120 may perform a communication according to a digital living network alliance (DLNA).

Here, the external device may include any type of electronic device capable of a communication with the communication unit 120 by a network. For example, the external device may include a server providing the Internet service, a web server, and all kinds of electronic devices performing a network communication in a home (e.g., a PC, a mobile PC, a PMP, a PDA, a mobile phone, an MP3 player, and an external storage medium such as a USB drive and an external hard disk drive).

The controller 140 to be described later may control the communication unit 120 to search multimedia contents stored in the external device capable of the communication by the network and may transmit to the external device a control signal for requesting the searched multimedia contents to be transmitted. In other words, if the communication unit 120 is able to perform the communication with the external device by the network, the controller 140 may control the communication unit 120 to transmit to the external device a control signal for requesting the multimedia contents stored therein to be transmitted to the display apparatus 100. Accordingly, the communication unit 120 may receive the multimedia contents corresponding to the control signal from the external device.

The storage 130 may store unified index information, capable of unified navigation of a plurality of the source-type multimedia contents, generated by the controller 140 to be described later. In addition, if the multimedia contents corresponding to the control signal are received from the external device through the communication unit 120, the storage 130 may store the received multimedia contents.

Other multimedia contents that are pre-stored in the storage 130 (i.e., that are not inputted from the content input unit 110) may also be processed into unified index information capable of the unified navigation to be stored therein.

The controller 140 may search a plurality of the source-type multimedia contents stored in the external device connected thereto through the network. Furthermore, the controller 140 may control the communication unit 120 to transmit to the external device the control signal for requesting the searched multimedia contents to be transmitted to the display apparatus 100. Also, the controller 140 may generate unified index information capable of the unified navigation of the multimedia contents inputted through the content input unit 110.

The controller 140 may search multimedia contents that are executable in the display apparatus 100. Specifically, the controller 140 may search at least one of: the multimedia contents pre-stored in the storage 130 of the display apparatus 100; image contents (e.g., HDMI image contents), if the second external device such as the DVD and the BD player is connected thereto; and the multimedia contents stored in the external device connected thereto by the network through the communication unit 120. As for the external device connected thereto through the network, the controller 140 may control the communication unit 120 to transmit thereto the control signal for requesting the multimedia contents stored in the external device to be transmitted to the display apparatus 100. If the multimedia contents are actually stored in the external device, the external device may transmit the stored multimedia contents to the display apparatus 100 in response to the control signal.

If the completely searched multimedia contents are received by the content input unit 110 or the communication unit 120, the controller 140 may generate unified index information capable of the unified navigation of the transmitted multimedia contents. Moreover, the controller 140 may control the storage 130 to store the generated unified index information. Here, the multimedia contents may include image and/or audio data as multimedia data. The multimedia contents may also include an analog image and/or an audio signal.

The display apparatus 100 according to the instant exemplary embodiment may further include a content processing unit 150, an output unit 160, a user input unit 170, and a user interface (UI) generating unit 180.

The content processing unit 150 may process the multimedia contents inputted into the content input unit 110. Accordingly, the content processing unit 150 may include at least one of an image signal processing unit (not shown) which processes an inputted image signal and an audio signal processing unit (not shown) which processes an inputted audio signal.

The output unit 160 may output at least any one of an image and an audio based on the multimedia contents processed by the content processing unit 150. Accordingly, the output unit 160 may include a display unit (not shown) which outputs an image corresponding to the image signal processed by the image signal processing unit included in the content processing unit 150. The display unit (not shown) may include a liquid crystal panel having a liquid crystal layer, an organic light-emitting panel having a light-emitting layer made of an organic material, a plasma display panel, or the like.

The output unit 160 may further include a speaker (not shown) which outputs an audio corresponding to the audio signal processed by the audio signal processing unit included in the content processing unit 150.

The user input unit 170 may receive a user's input. Accordingly, an input signal may be transmitted from a user through the user input 170 which may be embodied, for example, as a button of the display apparatus 100, a wire or a wireless remote control thereof, or a touch screen including a touch panel of a display unit of the display apparatus 100.

In addition, the user input unit 170 may include any combination of buttons or keys, such as an up/down key. A user may perform the unified navigation of the unified index information stored in the storage 130 by using the up/down key in order to select any one of the plurality of source-type multimedia contents. Moreover, the user input unit 170 may further include at least one of numeral keys and letter keys. By using the numeral keys, a user may select a multimedia content having a channel number shown in the unified index information stored in the storage 130.

The controller 140 may control the content processing unit 150 to process the multimedia contents selected from the plurality of the source-type multimedia contents according to the user's input by the user input unit 170 by referring to the unified index information stored in the storage 130 such that at least one of the image and the audio corresponding to the processed contents is outputted through the output unit 160.

Moreover, the controller 140 may generate unified index information by forming a channel map through a channel allotment of the plurality of the source-type multimedia contents and store the generated unified index information in the storage 130. When a broadcasting signal is received, a related art TV may form a channel map formed by allotting physical numbers thereto for an analog broadcasting signal and virtual numbers thereto for a digital broadcasting signal. However, the related art TV forms the channel map only for the broadcasting signal. The related TV does not form a channel map for an image signal, other than the digital broadcasting signal, inputted from an external device.

In contrast, in the instant exemplary embodiment, if the multimedia contents are inputted, it is possible to form the channel map by allotting channels to all types of contents regardless of the source type of the contents. For example, a display apparatus may typically designate 1000 or more channel numbers. The broadcasting signals may be allotted the channel numbers within a certain range determined by an international standard. Accordingly, the display apparatus 100 of the present exemplary embodiment may form a channel map by allotting channel numbers which are not allotted for the broadcasting signals to each of the source-type multimedia contents inputted/received into at least one of the content input unit 110 and the communication unit 120.

Moreover, the controller 140 may classify the source-type multimedia contents per category thereof and form a channel map by allotting the channels thereto according to the classified categories.

Accordingly, the display apparatus 100 may classify the multimedia contents per category regardless of the source types instead of classifying the multimedia contents per source type of the multimedia contents like in the related art TV. For example, if the categories include broadcasting, moving picture, picture, music, game, Internet and the like, channel numbers 1 to 199, 200 to 299, and 300 to 399, for example, may be allotted to the contents corresponding to the broadcasting, the picture, and the moving picture, respectively.

The controller 140 may also form a category home serving as a representative of the classified categories and allot a channel to the formed category home. For example, a channel number 200 may be allotted to a category home for the moving picture, and channel numbers 201, 202 ... may be allotted to moving picture contents belonging to the category of moving picture.

Further, the category home may include information related to the plurality of source-type multimedia contents belonging to the category home's category. Accordingly, the category home may include information related to all usable contents belonging to the category home's category. The information related to the contents may include at least one of channels allotted to the contents, kinds of the contents, sizes thereof, names thereof, and thumbnail images thereof.

Similarly, the controller 140 may classify the plurality of the source-type multimedia contents per source type thereof and form a channel map by allotting the channels thereto according to the classified source types.

Furthermore, the display apparatus 100 may classify the multimedia contents per source type of the multimedia contents. For example, if multimedia contents are received from a universal serial bus (USB) drive, an MP3 player, a PDA, and the like through the communication unit 120, the display apparatus 100 may classify the received multimedia contents according to the source types thereof and allot channel numbers 600 to 699, 700 to 799, and 800 to 899 to the contents received from the USB drive, the MP3 player, and the PDA, respectively.

The controller 140 may form homes according to the classified source types and allot channels to a representative home for the classified source types. For example, a channel number 200 may be allotted to a representative home for the source type of USB, and channel numbers 201, 202 ... may be allotted to the contents inputted from the USB.

Further, the representative home may include information related to source-type multimedia contents belonging to the representative home's source type. Accordingly, the representative home may include information related to all usable contents belonging to the representative home's source type. The information related to the contents may include at least one of channels allotted to the contents, kinds of the contents, sizes thereof, names thereof, and thumbnail images thereof.

The UI generating unit 180 may generate a graphical user interface (GUI) showing the unified index information stored in the storage 130 to display the generated GUI through the output unit 160. If the GUI is selected by a user's input inputted through the user input unit 170, the controller 140 may generate unified index information by forming a channel map through the channel allotment of the plurality of the source-type multimedia contents and display the formed channel map through the output unit 160.

Here, the GUI showing the unified index information may include a GUI showing the unified index information that is generated by the channel map formed by classifying the plurality of the source-type multimedia contents per category and allotting channels thereto. However, it is understood that all exemplary embodiments are not limited thereto. For example, in another exemplary embodiment, the GUI showing the unified index information may include a GUI showing the unified index information that is generated by a channel map formed by classifying the source-type multimedia contents per source type and allotting channels thereto.

Furthermore, according to an exemplary embodiment, if the GUI showing the unified index information is selected by the user input unit 170, the controller 140 may control to the output unit 160 to output the channel map, formed by classifying the source-type multimedia contents per category and allotting channels thereto. Moreover, while the channel map per category is outputted, if the GUI showing the unified index information is selected by the user input unit 170, the controller 140 may control to the output unit 160 to output the channel map, formed by classifying the source-type multimedia contents per source type and allotting channels thereto.

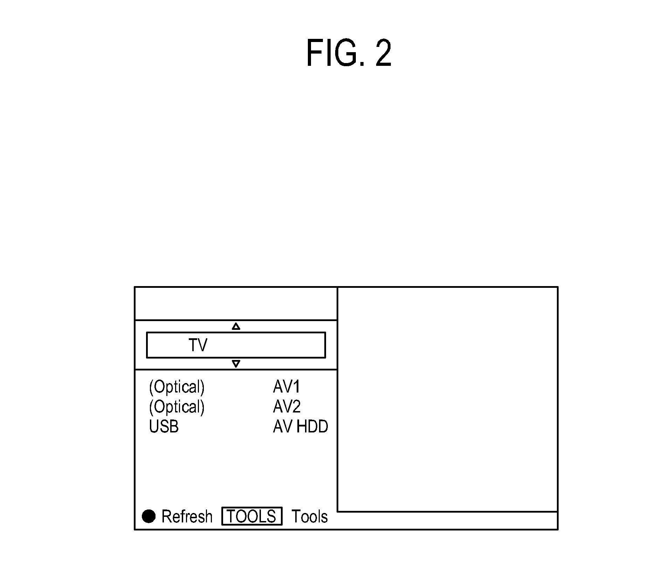

FIG. 2 shows a method of providing a broadcasting / external device / multimedia service in a related art TV. A user is required to select a "TV" menu to watch a broadcasting signal that is received as a ground wave. If the "TV" menu is selected, the user may select a desired channel by using the user input unit 170, embodied as a remote control, with reference to a channel map formed for general broadcasting signals.

Moreover, a user is required to select a "picture" menu to view pictures. If the "picture" menu is selected, the user may select a position where a desired picture is stored, i.e., a source type of providing the pictures and desired picture files to view the pictures.

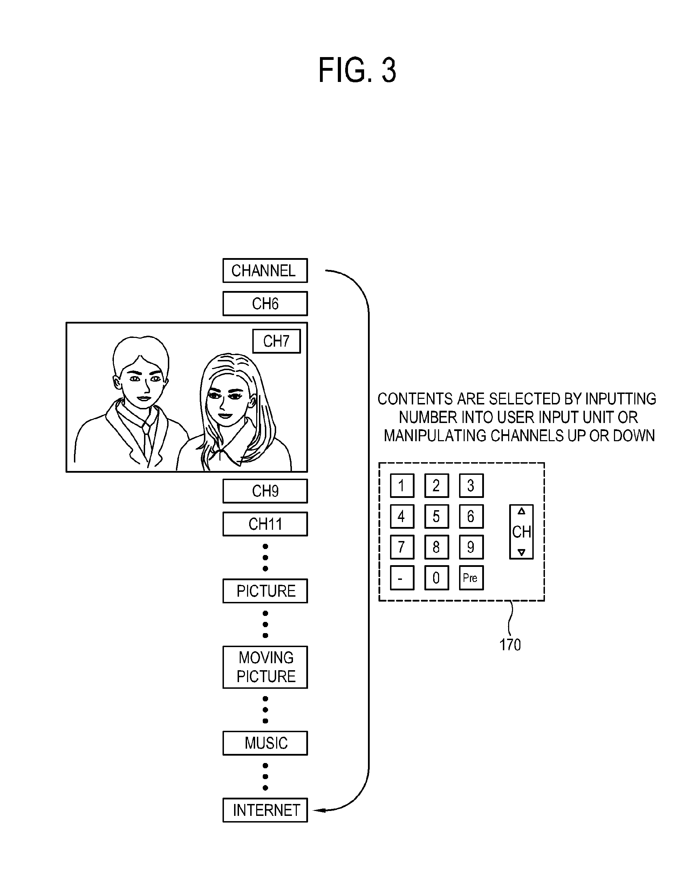

FIG. 3 shows unified index information capable of searching the source-type multimedia contents provided from the display apparatus 100 according to an exemplary embodiment by using unified navigation thereof. For example, as shown in FIG. 3, the channel numbers 6 to 199, 200 to 299, 300 to 399, 400 to 499 and 500 may be allotted to broadcasting signals, picture contents, moving picture contents, music contents, and Internet service contents, respectively.

Accordingly, by allowing the display apparatus 100 to search all usable multimedia contents and to form a channel map by allotment of channels thereto, a user may perform unified navigation of the multimedia contents by using an up/down key on the user input unit 170 that is embodied as a remote control. If a content to be watched or listened to is selected by performing the unified navigation, the content may be processed by the content processing unit 150, and an image and/or an audio corresponding to the content may immediately be outputted through the output unit 160. Therefore, when a user selects the multimedia contents, the user need not select a desired service mode in a main menu of a display apparatus.

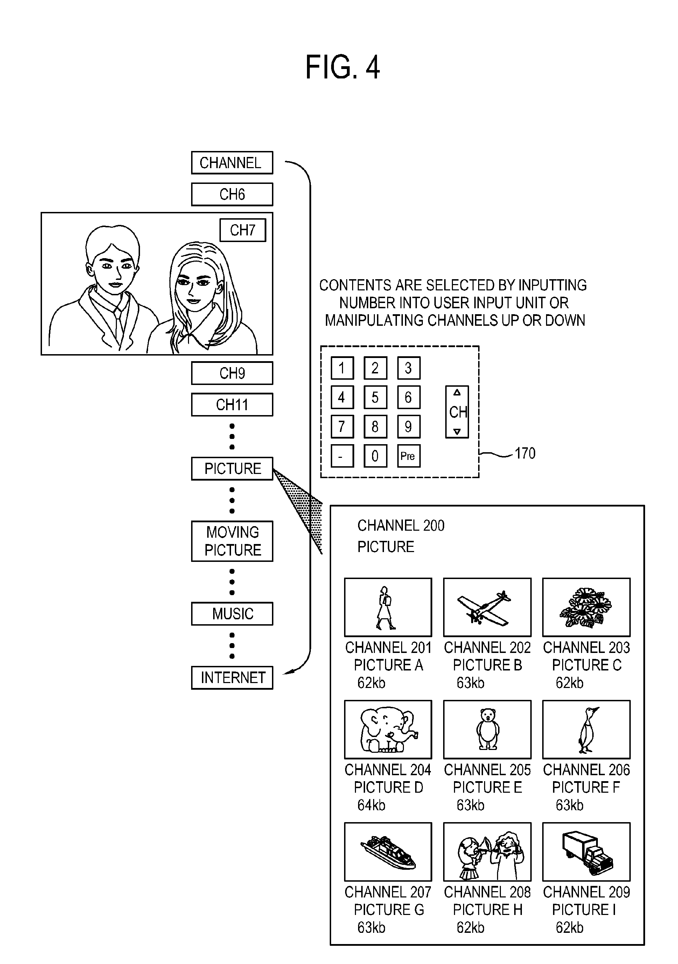

FIG. 4 shows a case where multimedia contents are classified per category, a category home serving as a representative of the classified categories is formed, and a channel is allotted to the formed category home according to an exemplary embodiment. Referring to FIG. 4, when the source-type multimedia contents are pictures, regardless of the source types, a picture category home may be formed, and, for example, a channel number 200 may be allotted to the picture category home. Channel numbers 201 to 299, for example, may be allotted to individual contents belonging to the picture category home.

The picture category home may show information related to all individual contents belonging to the picture category home. Accordingly, a user may select a desired picture content in the picture category home by, for example, inputting a number into a number inputting key provided in the user input unit 170 or using an up/down key provided therein. The picture contents selected by the user input unit 170 may be processed by the content processing unit 150 and outputted through the output unit 160.

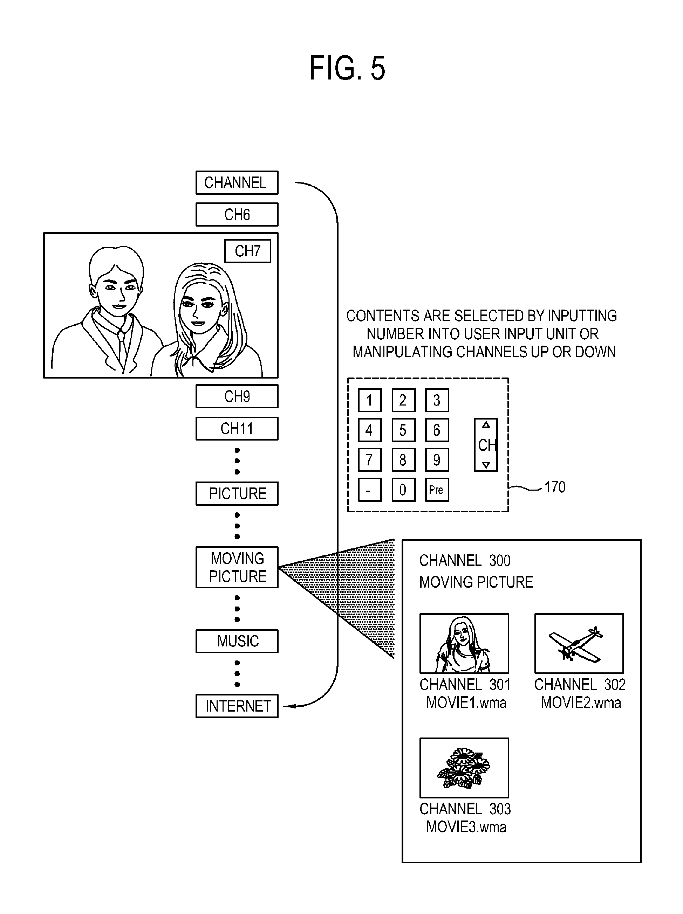

FIG. 5 shows a case where multimedia contents are classified per category, a category home serving as a representative of the classified categories is formed, and a channel is allotted to the formed category home according to an exemplary embodiment. Referring to FIG. 5, when the plurality of the source-type multimedia contents are moving pictures regardless of the source types, a moving picture category home may be formed, and, for example, a channel number 300 may be allotted to the moving picture category home. Channel numbers 301 to 399, for example, may be allotted to individual contents belonging to the moving picture category home.

The moving picture category home may show information related to all individual contents belonging to the moving picture category home. Accordingly, a user may select a desired moving picture content in the moving picture category home by, for example, inputting a number into a number inputting key provided in the user input unit 170 or using an up/down key provided therein. The moving picture contents selected by the user input unit 170 may be processed by the content processing unit 150 and played back through the output unit 160.

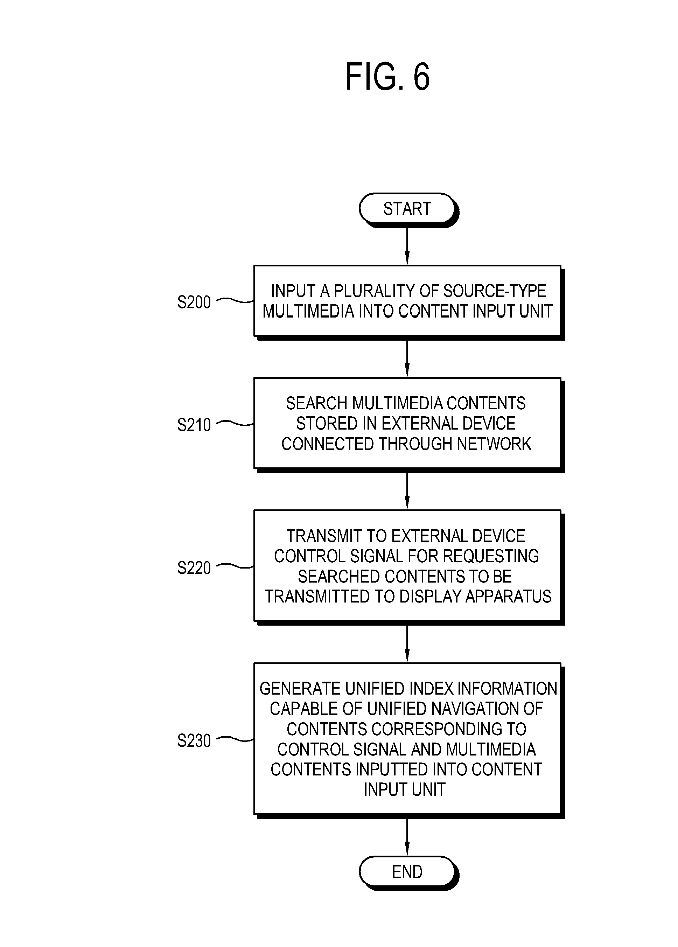

FIG. 6 is a flowchart showing a control operation of the display apparatus 100 in accordance with an exemplary embodiment. Referring to FIG. 6, a plurality of source-type multimedia contents may be inputted through the content input unit 110 (S200). Moreover, multimedia contents stored in an external device capable of a wired or wireless communication with the communication unit 120 may be searched (S210). A control signal for requesting the searched contents to be transmitted to the display apparatus 100 may be transmitted to the external device (S220). If the multimedia contents are received through the communication unit 120 in response to the control signal transmitted to the external device, unified index information may be generated, the unified index information being capable of unified navigation of the multimedia contents received through the communication unit 120 and the content input unit 110, respectively (230). It is understood that the operations S200 and S210 may be performed at the same time, or their orders may be changed.

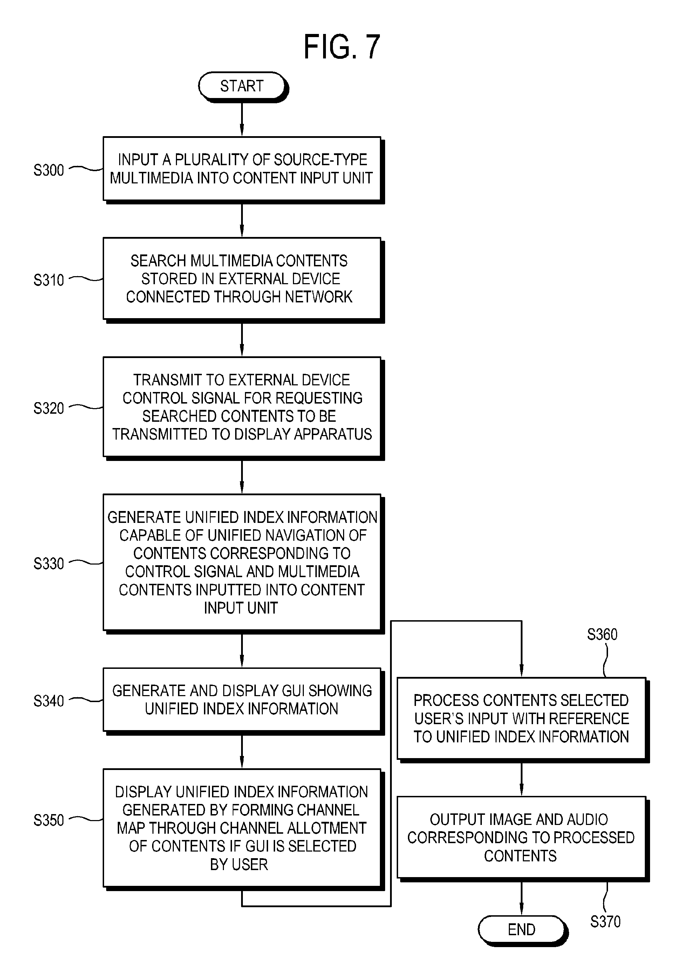

FIG. 7 is a flowchart showing a control operation of the display apparatus 100 in accordance with an exemplary embodiment. Referring to FIG. 7, a plurality of source-type multimedia contents may be inputted through the content input unit 110 (S300). Moreover, multimedia contents stored in an external device capable of a wired or wireless communication with the communication unit 120 may be searched (S310). A control signal for requesting the searched contents to be transmitted to the display apparatus 100 may be transmitted to the external device (S320). If the multimedia contents are received through the communication unit 120 in response to the control signal transmitted to the external device, unified index information may be generated, the unified index information being capable of unified navigation of the multimedia contents received through the communication unit 120 and the content input unit 110, respectively (330). It is understood that the operations S300 and S310 may be performed at the same time, or their orders may be changed.

A GUI showing that the unified index information is able to be displayed may be formed and displayed through the output unit 160 (S340). If the GUI is selected by a user, unified index information generated by forming a channel map by a channel allotment of the contents may be displayed through the output unit 160 such that a user can see the unified index information (S350). A user's input may be inputted to select any one of the multimedia contents according to the unified navigation performed through, for example, an up/down key of the user input unit 170 with reference to the unified index information. The contents may be selected by using a numeral key of the user input unit 170.

If the user's input for selecting the contents is received, the selected contents corresponding to the received input may be processed by the content processing unit 150 (S360). An image and/or an audio corresponding to the processed contents may be outputted through the output unit 160 (S370).

While not restricted thereto, the exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, the exemplary embodiments may be written as computer programs transmitted over a computer-readable transmission medium, such as a carrier wave, and received and implemented in general-use digital computers that execute the programs. Moreover, while not required in all aspects, one or more units of the display apparatus 100 can include a processor or microprocessor executing a computer program stored in a computer-readable medium, such as the storage 130.

Although a few exemplary embodiments have been shown and described, it will be appreciated by those skilled in the art that changes may be made in these exemplary embodiments without departing from the principles of the invention, the scope of which is defined in the appended claims.

## Claims

1. A method of controlling content of a display apparatus, the method comprising:
receiving, through a content input unit of the display apparatus, second source-type multimedia content from a second external device;
searching, through a communication unit of the display apparatus, first source-type multimedia content stored in a first external device connected to the communication unit and transmitting to the first external device a control signal for requesting the searched first source-type multimedia content to be transmitted to the display apparatus; and
generating unified index information for unified navigation of the first and the second source-type multimedia contents received from the first external device in response to the control signal and from the second external device, respectively.

2. The method of claim 1, further comprising storing the generated unified index information.

3. The method of claim 1, further comprising:
receiving a first user's input for selecting one of the first and the second source-type multimedia contents with reference to the unified index information;
processing the selected multimedia content selected according to the received first user's input; and
outputting at least one of an image and an audio corresponding to the processed multimedia content.

4. The method of claim 1, wherein the generating the unified index information comprises generating the unified index information by forming a channel map by a channel allotment of the first and the second source-type multimedia contents.

5. The method of claim 4, wherein the generating the unified index information by forming the channel map comprises forming the channel map by classifying the first and the second source-type multimedia contents per category and by allotting channels to the channel map according to the classified categories.

6. The method of claim 4, wherein the generating the unified index information by forming the channel map comprises forming channel map by classifying the first and the second source-type multimedia contents per source type and by allotting channels to the channel map according to the classified source types.

7. The method of claim 5, wherein the generating the unified index information further comprises:
forming a first category home which represents a first classified category;
forming a second category home which represents a second classified category;
allotting a first channel to the formed first category home; and
allotting a second channel to the formed second category home.

8. The method of claim 7, wherein the first and the second category homes each comprise information related to source-type multimedia contents respectively belonging to the first and the second categories.

9. The method of claim 8, wherein the information related to the source-type multimedia contents comprises at least one of channels allotted to the source-type multimedia contents, kinds of the contents, sizes of the contents, names of the contents, and thumbnail images of the contents.

10. The method of claim 3, wherein the receiving the first user's input comprises selecting the multimedia content from among the first and the second source-type multimedia contents by performing the unified navigation of the unified index information according to an input of an up/down key of a user input unit.

11. The method of claim 1, wherein the receiving the second source-type multimedia content comprises receiving a broadcasting signal comprising the second source-type multimedia content.

12. The method of claim 1, wherein the receiving the second source-type multimedia content comprises receiving, from the second external device, a image signal comprising the second source-type multimedia content, wherein the image signal is not a broadcasting signal.

13. The method of claim 3, further comprising:
generating a graphical user interface (GUI) showing the unified index information; and
displaying, through an output unit, the unified index information generated by forming a channel map through a channel allotment of the first and the second source-type multimedia contents if the GUI is selected by a second user's input.

14. The method of claim 13, wherein the GUI shows the unified index information that is generated by a channel map formed by classifying the first and the second source-type multimedia contents per category and allotting channels to the channel map according to the classified categories.

15. The method of claim 13, wherein the GUI shows the unified index information that is generated by a channel map formed by classifying the first and the second source-type multimedia contents per source type and allotting channels to the channel map according to the classified source types.
